(19) Europäisches Patentamt
European Patent Office
Office européen des brevets

(11) **EP 1 972 485 A2**

(12) **EUROPÄISCHE PATENTANMELDUNG**

(43) Veröffentlichungstag:
**24.09.2008   Patentblatt 2008/39**

(51) Int Cl.:
*B60L 11/18* (2006.01)

(21) Anmeldenummer: **08004689.9**

(22) Anmeldetag: **13.03.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **21.03.2007   DE 102007013462**

(71) Anmelder: **Renk Aktiengesellschaft**
**86159 Augsburg (DE)**

(72) Erfinder: **Marquardt, Rainer, Dr. Prof.-Ing.**
**85521 Riemerling (DE)**

(74) Vertreter: **Krause, Thomas**
**MAN Diesel SE**
**Intellectual Property (GJP)**
**Stadtbachstrasse 1**
**86153 Augsburg (DE)**

(54) **Leistungselektronische Schaltungsanordnung für eine Drehfeldmaschine**

(57)   Eine leistungselektronische Schaltungsanordnung umfasst Funktionsblöcke (10, 20, 100) zum steuerbaren, bidirektionalen Energieaustausch zwischen einer Drehfeldmaschine mit wenigstens einem Strang (41, 42, 43) und einem externen Energiespeicher (30) mit einem positiven (P) und einem negativen (N) Pol. Wenigstens ein Funktionsblock ist als leistungsseitig anschluskompatibler Funktionsblock (100) ausgebildet, der wenigstens einen internen Energiespeicher (9) umfasst, wobei dieser Funktionsblock wenigstens einen zusätzlichen Schaltzustand aufweist, in dem eine Ausgangsspannung (UX2) positiver als der positive Pol (P) des externen Energiespeichers (30) ist; und/oder in dem eine Ausgangsspannung (UX2) negativer als der negative Pol (N) des Energiespeichers (30) ist.

Fig. 5

EP 1 972 485 A2

**Beschreibung**

Die vorliegende Erfindung betrifft eine leistungselektronische Schaltungsanordnung für eine Drehfeldmaschine.

Elektrische Antriebssysteme mit Drehfeldmaschinen, insbesondere mit permanenterregten Synchronmaschinen, haben bereits einen hohen Entwicklungsstand erreicht. Ihre hohen spezifischen Kraftdichten ermöglichen vorteilhafterweise hohe Startdrehmomente bei gleichzeitig geringem Gewicht. Die erzielten Wirkungsgrade des gesamten Antriebssystems und die Leistungsdichte hängen dabei in hohem Maße von der leistungselektronischen Speisung ab.

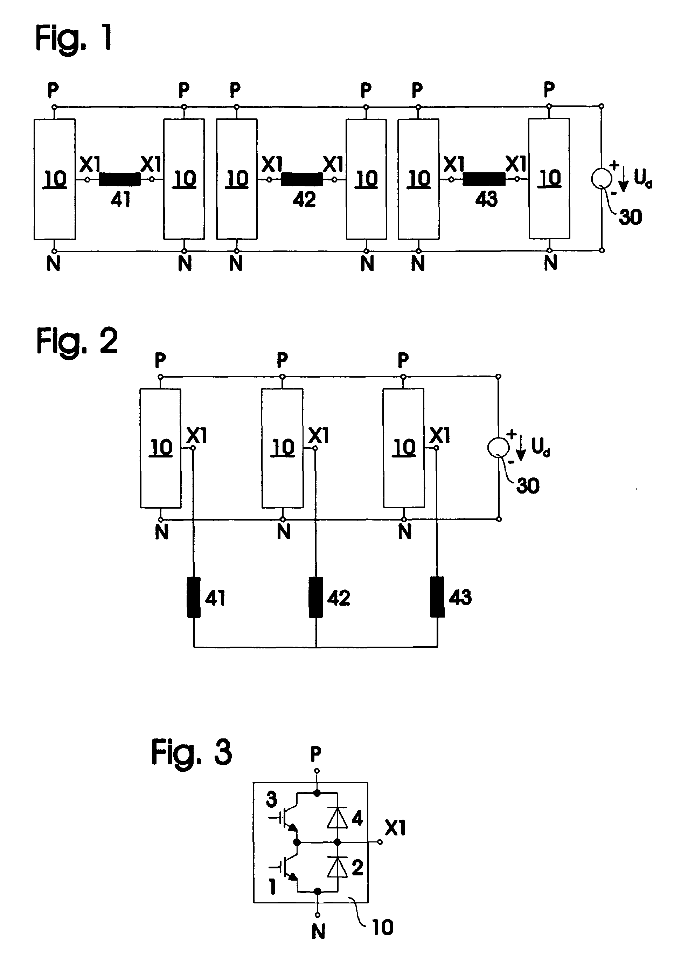

Aus betriebsinternem Stand der Technik sind hierfür bereits verschiedene leistungselektronische Schaltungsanordnungen bekannt. So zeigt Fig. 1 eine Anordnung, in der drei Stränge 41-43 einer mit einer Gleichspannungsquelle 30 verbundenen permanenterregten Synchronmaschine unabhängig voneinander mittels leistungselektronischer Funktionsblöcke 10 steuerbar sind. In Fig. 2 ist eine Anordnung mit Funktionsblöcken 10 dargestellt, in der die einzelnen Stränge 41-43 nicht unabhängig voneinander gesteuert werden können.

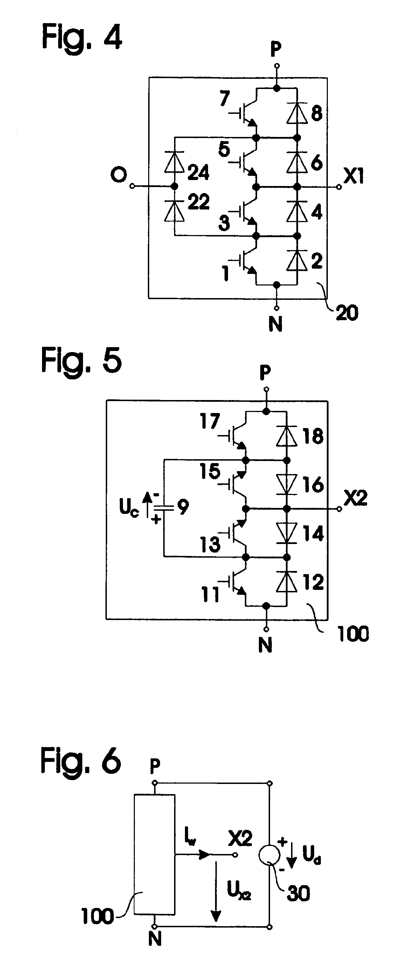

Fig. 3 zeigt hierzu den Aufbau eines Funktionsblockes 10 aus Fig. 1 bzw. aus Fig. 2 in Zweipunktschaltung als sogenannte Halbbrückenschaltung mit zwei steuerbaren elektronischen Schaltern 1, 3 und zwei antiparallelen Dioden 2, 4. Alternativ können auch Mehrpunktschaltungen eingesetzt werden. Exemplarisch zeigt Fig. 4 den Aufbau eines Funktionsblockes 20 in Dreipunktschaltung mit vier steuerbaren elektronischen Schaltern 1, 3, 5, 7, vier antiparallelen Dioden 2, 4, 6, 8 und zwei weiteren Dioden 22, 24.

Solche Grundschaltungen ermöglichen es, die Synchronmaschine sowohl motorisch, wobei elektrische Energie aus einem externen Energiespeicher wie der Gleichspannungsquelle in der Synchronmaschine in mechanische Arbeit umgesetzt wird, als auch generatorisch zu betreiben, wobei dann an der Synchronmaschine verrichtete mechanische Arbeit im externen Energiespeicher als elektrische Energie gespeichert wird. Hierzu kann der externe Energiespeicher beispielsweise als Akkumulator-Batterie entladen (motorischer Betrieb) bzw. geladen (generatorischer Betrieb) werden.

Damit kann beispielsweise beim mechanischen Bremsen Energie zurückgewonnen werden. Gleichermaßen kann in Hybridsystemen die zeitvariante Differenz zwischen der dem Antriebssystem abgeforderten und der von einer Brennkraftmaschine zur Verfügung gestellten Leistung ausgeglichen werden.

Eine Aufgabe der vorliegenden Erfindung ist es, eine leistungselektronische Schaltungsanordnung für eine Drehfeldmaschine zur Verfügung zu stellen, die einen effizienteren Betrieb der Drehfeldmaschine ermöglicht.

Zur Lösung dieser Aufgabe ist eine leistungselektronische Schaltungsanordnung nach dem Oberbegriff des Anspruchs 1 durch dessen kennzeichnenden Merkmale weitergebildet.

Eine leistungselektronische Schaltungsanordnung nach einer Ausführung der vorliegenden Erfindung umfasst einen oder mehrere Funktionsblöcke zum steuerbaren, bidirektionalen Energieaustausch zwischen einer Drehfeldmaschine mit wenigstens einem Strang, bevorzugt mit mehreren Strängen, insbesondere mit drei Strängen, und einem externen Energiespeicher, der einen positiven und einem negativen Pol aufweist. Ein oder mehrere Funktionsblöcke können jeweils eine Zweipunktschaltung umfassen. Zusätzlich oder alternativ können ein oder mehrere weitere Funktionsblöcke jeweils eine Mehrpunktschaltungen umfassen.

Wenigstens ein Funktionsblock ist als leistungsseitig anschlusskompatibler Funktionsblock ausgebildet, der wenigstens einen internen Energiespeicher umfasst. Dieser leistungsseitig anschlusskompatible Funktionsblock weist wenigstens einen zusätzlichen Schaltzustand auf, in dem eine Ausgangsspannung positiver als der positive Pol des externen Energiespeichers ist. Zusätzlich oder alternativ hierzu weist dieser leistungsseitig anschlusskompatible Funktionsblock wenigstens einen zusätzlichen Schaltzustand auf, in dem eine Ausgangsspannung negativer als der negative Pol des Energiespeichers ist.

Durch den internen Energiespeicher, der bevorzugt einen oder mehrere seriell oder parallel geschaltete unipolare Speicherkondensatoren umfasst, lässt sich wenigstens ein zusätzlicher Schaltzustand darstellen, in dem eine Ausgangsspannung des leistungsseitig anschlusskompatiblen Funktionsblocks betragsmäßig größer als der jeweilige Pol des Energiespeichers ist.

Der durch den zusätzlichen Schaltzustand, in dem eine Ausgangsspannung positiver als der positive Pol oder negativer als der negative Pol des Energiespeichers ist, geschaffene zusätzliche Freiheitsgrad ermöglicht einen deutlich effizienteren Betrieb der Drehfeldmaschine.

In einer besonders bevorzugten Ausführung weist ein leistungsseitig anschlusskompatibler Funktionsblock wenigstens zwei zusätzliche Schaltzustände und damit insgesamt im Vergleich zu der mit Bezug auf Fig. 3 beschriebenen Anordnung wenigstens vier mögliche Ausgangsspannungswerte auf. Dabei ist in einem zusätzlichen Schaltzustand eine Ausgangsspannung positiver als der positive Pol des externen Energiespeichers und in einem weiteren zusätzlichen Schaltzustand eine Ausgangsspannung negativer als der negative Pol des Energiespeichers. Hierdurch können insbesondere hochausgenutzte permanenterregte Synchronmaschinen besonders effizient betrieben werden.

Eine hinsichtlich Gewicht und/oder Raumbedarf optimierte Drehfeldmaschine weist nur eine geringe Längsinduktivität auf. Diese bedingt eine hohe Schaltfrequenz (sogenannte "Pulsfrequenz") der Leistungselektronik bzw. der Mehrpunktschaltungen, um eine unerwünschte Stromwelligkeit der Strangströme zu begrenzen. Bei den mit Bezug auf Fig. 4 beschriebenen Anordnung ist die Dreipunktschaltung hierzu oftmals nicht ausreichend, was den technischen Aufwand nachteilig erhöht.

Zugleich erfordert eine angestrebte hohe Leistungsausnutzung einer Drehfeldmaschine - wenigstens kurzzeitig - hohe Strangströme. Daher erhöht sich - trotz der kleinen Längsinduktivität - der gesamte Spannungsbedarf bei der Grundfrequenz der Drehfeldmaschine in Bezug auf die Wirkkomponente der Spannung. Auch dies beeinflusst den Wirkungsgrad bekannter Anordnungen ungünstig und erhöht nachteilig deren technischen Aufwand, da dementsprechend eine hohe Gleichspannung und/oder eine niedrige Windungszahl für die Statorwicklung gewählt werden muss. Letzteres führt zu unerwünscht hohen Strangströmen.

Durch eine leistungselektronische Schaltungsanordnung nach einer Ausführung der vorliegenden Erfindung können diese Nachteile gemindert werden. Die zusätzlichen Freiheitsgrade ermöglichen eine besser angepasste Steuerung und damit einen effizienteren Betrieb einer solchen Drehfeldmaschine.

Gleichspannungsquellen werden im realen Einsatz häufig mit parallelgeschalteten Filterkondensatoren ausgerüstet, um die hochfrequenten Stromkomponenten der Leistungselektronik zu führen. Der durch eine hohe Gleichspannung und/oder eine niedrige Windungszahl für die Statorwicklung verschlechterte Wirkungsgrad bekannter Anordnungen, der vorstehend beschrieben wurde, stellt insofern einen ungünstigen Leistungsfaktor dar, der bei bekannten Anordnungen in einer höheren effektiven Strombelastung und/oder größer dimensionierten Filterkondensatoren resultiert.

Durch die zusätzlichen Freiheitsgrade einer leistungselektronischen Schaltungsanordnung nach einer Ausführung der vorliegenden Erfindung kann hier Abhilfe geschaffen werden.

In den vorstehend mit Bezug auf die Fig. 1-4 erläuterten bekannten Schaltungsanordnungen führt ein Kurzschluss der Gleichspannungsquelle 30 zu einem unkontrollierten Überstrom in den Strangwicklungen 41-43. Dies erzeugt hohe Bremsmomente, die die Synchronmaschine bzw. die mit ihr gekoppelten Antriebssystemkomponenten (beispielsweise ein Getriebe, eine Brennkraftmaschine oder eines Hybridantriebes) belasten und schädigen können. Ähnliche Probleme treten auch dann auf, wenn die Spannung $U_d$ der Gleichspannungsquelle, beispielsweise aufgrund hoher Belastungen durch andere Verbraucher, signifikant unter ihre Nennspannung fällt,

Diese Probleme können in bekannter Weise durch ein mechanisches Auskuppeln der Drehfeldmaschine verhindert werden. Eine leistungselektronische Schaltungsanordnung nach einer Ausführung der vorliegenden Erfindung kann im Störungsfall hingegen, wie nachfolgend anhand der Ausführungsbeispiele näher beschrieben, so geschaltet werden, dass die vorstehend erläuterten Probleme bei einem Kurzschluss in dem externen Energiespeicher oder einem Spannungsabfall des externen Energiespeichers unter seine Nennspannung vermieden werden.

Bevorzugt umfasst der externe Energiespeicher eine oder mehrere wiederaufladbare Akkumulator-Batterien. Zusätzlich oder alternativ kann der externe Energiespeicher beispielsweise eine oder mehrere parallel oder in Serie geschaltete Brennstoffzellen-Batterien umfassen. Gleichermaßen kann der externe Energiespeicher auch ein Gleichspannungsnetz umfassen.

Wie nachfolgend anhand verschiedener Ausführungsbeispiele näher erläutert, kann die Grundstruktur einer bekannten leistungselektronische Schaltungsanordnung vorteilhafterweise erhalten bleiben, wobei je nach Bedarf ein, mehrere oder alle Funktionsblöcke durch leistungsseitig anschlusskompatible Funktionsblöcke ersetzt sind, die wenigstens einen internen Energiespeicher umfassen und wenigstens einen zusätzlichen Schaltzustand aufweisen, in dem eine Ausgangsspannung positiver als der positive Pol des externen Energiespeichers oder negativer als der negative Pol des Energiespeichers ist. Bevorzugt weisen ein, mehrere oder alle leistungsseitig anschlusskompatible Funktionsblöcke wenigstens einen zusätzlichen Schaltzustand auf, in dem eine Ausgangsspannung positiver als der positive Pol des externen Energiespeichers ist, und wenigstens einen weiteren zusätzlichen Schaltzustand, in dem eine Ausgangsspannung negativer als der negative Pol des Energiespeichers ist.

Zwar erfordern leistungsseitig anschlusskompatible Funktionsblöcke nach der vorliegenden Erfindung einen geringfügig höheren technischen Aufwand als bekannte Funktionsblöcke, wie sie beispielsweise mit Bezug auf Fig. 3 dargestellt sind. Doch eröffnen umgekehrt solche leistungsseitig anschlusskompatible Funktionsblöcke mehr Freiheitsgrade der Steuerung bzw. Regelung und weisen insgesamt eine erweiterte Funktionalität auf, die einen effizienteren Betrieb der Drehfeldmaschine ermöglicht. Durch geeignetes Ersetzen eines, mehrerer oder aller Funktionsblöcke bekannter Bauart durch leistungsseitig anschlusskompatible Funktionsblöcke nach der vorliegenden Erfindung kann daher je nach erwünschter Steuerungsvielfalt ein optimaler Kompromiss zwischen dem durch den Ersatz erhöhten technischen Aufwand und der hierdurch erzielten Effizienzverbesserung gewählt werden. Somit erhöht sich vorteilhaft auch die Gestaltungsfreiheit bei der Auslegung der leistungselektronischen Schaltungsanordnung.

Mit besonderem Vorteil wird eine leistungselektronischen Schaltungsanordnung nach einer Ausführung der vorliegenden Erfindung zum steuerbaren, bidirektionalen Energieaustausch zwischen einer permanenterregten, hochausgenutzten Synchronmaschine und eine Gleichspannungsquelle (30) eingesetzt.

Bevorzugt ist die Spannung des internen Energiespeichers abhängig von der Drehzahl und/oder dem Drehmoment der Drehfeldmaschine variabel steuer- bzw. regelbar. Hierzu kann die leistungselektronische Schaltungsanordnung eine entsprechende Steuereinrichtung umfassen. Beispielsweise kann die Steuereinrichtung die Spannung $U_C$ des internen Energiespeichers auf einen Sollwert $U_{C, soll}$ steuern oder regeln, der sich entsprechend der Drehzahl und/oder des Drehmomentes der Drehfeldmaschine ändert. Bevorzugt kann dieser Sollwert $U_{C,\,soll}$ bei einer Drehzahl bzw. einem Drehmoment gleich oder nahe Null ebenfalls im Wesentlichen gleich Null sein. Hierzu kann der Sollwert beispielsweise einer Gleichung der Form

$$U_{C,\,soll} = \Sigma\,(c_i \times N^i)$$

wobei

$c_i$ (i=1 ...n):     Konstanten; und
N:                die Drehzahl oder das Drehmoment

bezeichnet, gehorchen. Dies minimiert vorteilhafterweise bei Stillstand oder niedrigen Drehzahlen der Drehfeldmaschine die Stromwelligkeit und kann darüber hinaus eine Vorladung des internen Energiespeichers überflüssig machen.

In einer bevorzugten Dimensionierung der vorliegenden Erfindung ist eine zulässige Spannung des internen Energiespeichers derart gewählt, dass bei einem Kurzschluss und/oder einer Unterspannung des externen Energiespeichers kein unkontrolliertes oder übermäßiges Bremsen der Drehfeldmaschine auftritt. Damit können die vorstehend geschilderten Belastungen der Drehfeldmaschine und damit gekoppelter Antriebselemente wie beispielsweise Getriebe, Verbrennungsmotoren, Pumpen oder dergleichen durch unkontrollierte Stoßmomente bzw. langandauernde Kurzschlussströme, die bei einem Störfall auftreten, verhindert werden.

In einem leistungsseitig anschlusskompatiblen Funktionsblock nach der vorliegenden Erfindung kann als steuerbarer elektronischer Schalter ein asymmetrisch sperrender IGBT und/oder ein rückwärtsleitendes Bauelement, insbesondere ein MOSFET und/oder CoolMOS eingesetzt werden. Da dieser Schalter keine Sperrfähigkeit in Rückwärtsrichtung aufweisen muss, sind mit Vorteil moderne, verlustoptimierte Bauelemente wie beispielsweise die vorgenannten einsetzbar.

Einige Vorteile werden nachstehend nochmals gesondert hervorgehoben. Erstens wird ein effizienterer Betrieb der Drehfeldmaschine ermöglicht. Zweitens wird der mögliche Betriebsbereich auf höhere Drehzahlen mit erhöhten Drehmomenten erweitert. Drittens wird der Betrieb an kleineren und/oder stark schwankenden Gleichspannungen ($U_d$) verbessert. Und viertens wird es möglich bei Unterspannung oder Kurzschluss ($U_d = 0$) der speisenden Gleichspannung ($U_d$) störende Bremsmomente oder Stoßmomente zu vermeiden.

Weitere Aufgaben, Merkmale und Vorteile der vorliegenden Erfindung ergeben sich aus den Unteransprüchen und den nachfolgend erläuterten Ausführungsbeispielen. Hierzu zeigt, teilweise schematisiert:

Fig. 1      eine erste, betriebsintern bekannte leistungselektronische Schaltungsanordnung;

Fig. 2      eine zweite, betriebsintern bekannte leistungselektronische Schaltungsanordnung;

Fig. 3      einen Funktionsblock der leistungselektronischen Schaltungsanordnung nach Fig. 1 oder 2;

Fig. 4      einen Funktionsblock einer betriebsintern bekannten Abwandlung der leistungselektronischen Schaltungsanordnung nach Fig. 1 oder 2;

Fig. 5      einen leistungsseitig anschlusskompatiblen Funktionsblock einer leistungselektronischen Schaltungsanordnung nach einer Ausführung der vorliegenden Erfindung;

Fig. 6      ein Prinzipschaltbild zu Fig. 5;

Fig. 7      eine leistungselektronische Schaltungsanordnung nach einer ersten Ausführung der vorliegenden Erfindung;

Fig. 8      eine leistungselektronische Schaltungsanordnung nach einer zweiten Ausführung der vorliegenden Erfindung;

Fig. 9      eine leistungselektronische Schaltungsanordnung nach einer dritten Ausführung der vorliegenden Erfindung; und

Fig. 10     eine leistungselektronische Schaltungsanordnung nach einer vierten Ausführung der vorliegenden Erfindung.

Fig. 1 zeigt eine erste, betriebsintern bekannte leistungselektronische Schaltungsanordnung zur Speisung einer permanenterregten Synchronmaschine aus einer Gleichspannungsquelle 30 in Form einer Akkumulator-Batterie mit einer Spannung $U_d$. Die im Übrigen nicht näher dargestellte Synchronmaschine umfasst drei Stränge 41, 42 bzw. 43. Jedem Strang sind jeweils zwei Funktionsblöcke 10 zugeordnet, die mit Bezug auf Fig. 3 nachstehend näher erläutert werden. Diese Anordnung ermöglicht eine voneinander unabhängige Steuerung der einzelnen Strangströme. Gleichermaßen gestattet die Anordnung sowohl motorischen als auch generatorischen Betrieb der Drehfeldmaschine, i.e. beide Energierichtungen.

Fig. 2 zeigt eine zweite, betriebsintern bekannte leistungselektronische Schaltungsanordnung. Mit der ersten, betriebsintern bekannten leistungselektronischen Schaltungsanordnung nach Fig. 1 baugleiche Elemente werden durch gleiche Bezugszeichen bezeichnet, so dass nachfolgend nur auf die Unterschiede zu der Schaltungsanordnung nach Fig. 1 eingegangen wird.

In der zweiten, betriebsintern als "dreiphasiger Pulswechselrichter" bekannten leistungselektronischen Schaltungsanordnung nach Fig. 2 ist jedem Strang 41, 42 bzw. 43 nur je ein Funktionsblock 10 zugeordnet. Damit ermöglicht die Anordnung nach Fig. 2 keine unabhängige Steuerung der Strangströme mehr, reduziert jedoch den Bauaufwand.

Fig. 3 zeigt einen in Form einer Zweipunktschaltung ausgebildeten Funktionsblock 10 der ersten oder zweiten, betriebsintern bekannten leistungselektronischen Schaltungsanordnung nach Fig. 1 bzw. 2. Der Funktionsblock umfasst zwei steuerbare elektronische Schalter 1 bzw. 3 und zwei antiparallele Dioden 2 bzw. 4 in der in Fig. 3 dargestellten Verschaltung. Mit "P" ist dabei der positive Pol des externen Energiespeichers 30 bzw. ein damit verbindbarer Plusanschluss bezeichnet, mit "N" der negative Pol des externen Energiespeichers 30 bzw. ein damit verbindbarer Minusanschluss des Funktionsblocks. "X1" bezeichnet einen Leistungsanschluss des Funktionsblockes 10, der mit einem Anschluss eines Stranges 41, 42 oder 43 der Drehfeldmaschine verbindbar ist.

Fig. 4 zeigt eine in Form einer Dreipunktschaltung ausgebildete Abwandlung 20 des Funktionsblocks 10 der ersten oder zweiten, betriebsintern bekannten leistungselektronischen Schaltungsanordnung nach Fig. 1 bzw. 2. Wiederum werden baugleiche Elemente durch gleiche Bezugszeichen bezeichnet, so dass nachfolgend nur auf die Unterschiede zu dem Funktionsblock nach Fig. 3 eingegangen wird.

Die Abwandlung 20 des Funktionsblockes 10, die statt seiner in den leistungselektronischen Schaltungsanordnung nach Fig. 1 bzw. 2 eingesetzt sein kann, umfasst insgesamt vier steuerbare elektronische Schalter 1, 3, 5, 7, vier antiparallel Dioden 2, 4, 6, 8 und zwei weitere Dioden 22, 24 in der in Fig. 4 gezeigten Verschaltung.

Da diese Schaltungsanordnungen und Funktionsblöcke bekannt sind und nur zur Erläuterung von Nachteilen des Standes der Technik dienen, bedürfen sie keiner eingehenderen Erläuterung.

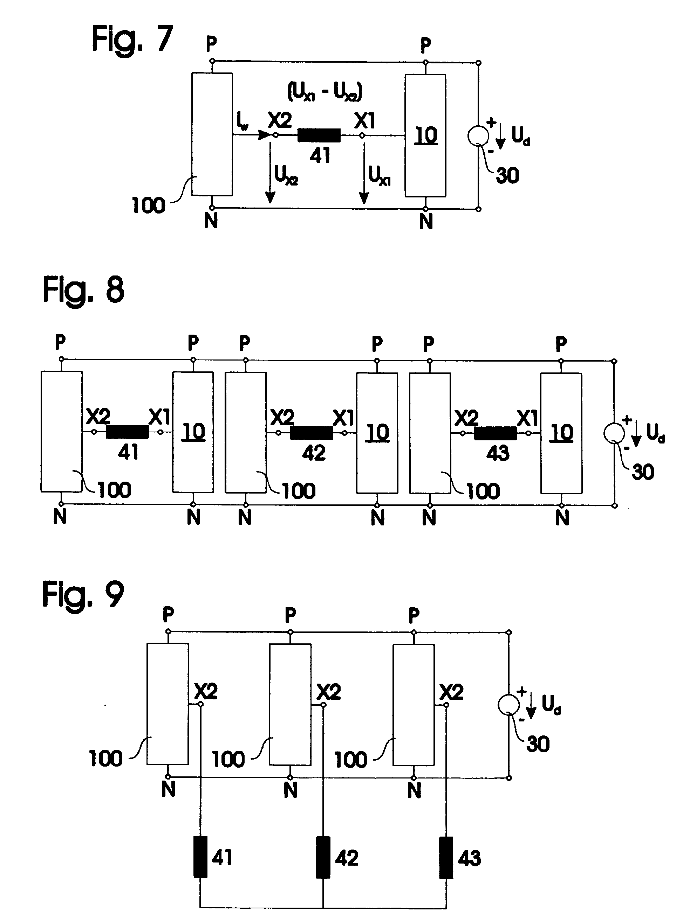

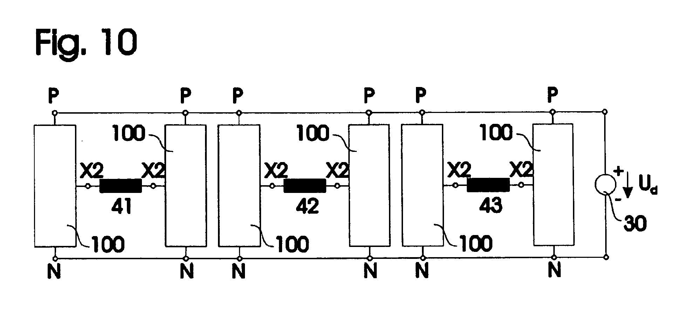

Die Fig. 7 bis 10 zeigen nun teilweise der Fig. 1 bzw. Fig. 2 entsprechende leistungselektronische Schaltungsanordnungen, in denen erfindungsgemäß die Hälfte (Fig. 7, 8) bzw. alle (Fig. 9, 10) Funktionsblöcke 10 bzw. 20 durch einen leistungsseitig anschlusskompatiblen Funktionsblock 100 ersetzt sind. Wie hieraus hervorgeht, kann vorteilhafterweise die Grundstruktur der Schaltungsanordnung beibehalten werden, wobei durch das Ersetzen einer wählbaren Anzahl von bekannten Funktionsblöcken 10 bzw. 20 durch leistungsseitig anschlusskompatible Funktionsblöcke 100 die Funktionalität der Schaltungsanordnung stufenweise erhöht und so ein jeweils optimaler Kompromiss zwischen zusätzlichem Aufwand durch weitere leistungsseitig anschlusskompatible Funktionsblöcke 100 und hierdurch erzieltem Nutzen aufgrund der Erhöhung der Freiheitsgrade dargestellt werden kann.

In den Fig. 8, 9, und 10 ist jeweils eine Drehfeldmaschine mit drei Strängen 41, 42, 43 dargestellt. Diese Anzahl ist rein exemplarisch zu verstehen, eine leistungselektronische Schaltungsanordnung nach der vorliegenden Erfindung kann gleichermaßen auch zum steuerbaren, bidirektionalen Energieaustausch zwischen einem externen Energiespeicher 30 und einer Drehfeldmaschine mit weniger oder mehr Strängen eingesetzt werden.

Der externe Energiespeicher 30 ist ebenfalls nicht auf eine Akkumulator-Batterie beschränkt, sondern kann zusätzlich oder alternativ beispielsweise eine Brennstoffzellen-Batterie und/oder ein Gleichspannungsnetz umfassen. Seine Spannung $U_d$ liegt im Ausführungsbeispiel im Bereich von 200 bis 800V.

Fig. 5 zeigt eine Ausführung eines leistungsseitig anschlusskompatiblen Funktionsblockes 100, der in den Schaltungsanordnungen nach Fig. 7, 8, 9 oder 10 eingesetzt ist. Fig. 6 zeigt das zugehörige Prinzipschaltbild.

Wie hieraus zu erkennen, umfasst der leistungsseitig anschlusskompatible Funktionsblock 100, wie er in der ersten (Fig. 7), zweiten (Fig. 8), dritten (Fig. 9) und vierte (Fig. 10) Ausführung der vorliegenden Erfindung verwendet wird, einen Plusanschluss P, der mit einem positiven Pol des externen Energiespeichers 30 verbindbar ist, einen Minuspol N, der mit einem negativen Pol des externen Energiespeichers 30 verbindbar ist, und einen Lastanschluss X2, der mit einem Anschluss eines Stranges 41, 42 oder 43 der Drehfeldmaschine verbindbar ist.

Ausgehend von Minuspol N umfasst der leistungsseitig anschlusskompatible Funktionsblock 100 vier hintereinander geschaltete Schleifen mit je einem steuerbaren elektronischen Schalter 11, 13, 15 bzw. 17 und einer Diode 12, 14, 16 bzw. 18. Jede Diode definiert durch ihre Durchlassrichtung einen Umlaufsinn der jeweiligen Schleife.

Eine erste Schleife (unten in Fig. 5) mit dem steuerbaren elektronischen Schalter 11 und der Diode 12, deren Umlaufsinn mathematisch positiv ist, ist mit dem Minusanschluss N verbunden.

Eine zweite Schleife mit dem steuerbaren elektronischen Schalter 13 und der Diode 14, deren Umlaufsinn mathematisch negativ ist, ist mit der ersten Schleife verbunden.

Mit der zweiten Schleife ist eine dritte Schleife mit dem steuerbaren elektronischen Schalter 15 und der Diode 16 verbunden, deren Umlaufsinn ebenfalls mathematisch negativ ist.

Schließlich ist eine vierte Schleife (oben in Fig. 5) mit dem steuerbaren elektronischen Schalter 17 und der Diode 18, deren Umlaufsinn mathematisch positiv ist, ist mit dem Plusanschluss P und der dritten Schleife verbunden.

Ein Knoten, in dem die zweite und dritte Schleife miteinander verbunden sind, ist auch mit dem Lastanschluss X2 verbunden.

Weiterhin ist ein interner Energiespeicher 9 in Form eines unipolaren Speicherkondensators vorgesehen, dessen Anschlüsse mit einem Knoten verbunden sind, in dem die erste und zweite bzw. die dritte und vierte Schleife miteinander verbunden sind.

Im Übrigen ergibt sich die Verschaltung aus den Figuren.

Mit $U_{X1}$ wird die Ausgangsspannung eines bekannten Funktionsblockes 10 bzw. 20 nach Fig. 3 bzw. 4 bezeichnet, mit $U_{X2}$ die Ausgangsspannung eines leistungsseitig anschlusskompatiblen Funktionsblockes 100 nach Fig. 5 bzw. 6. Diese Ausgangsspannungen sind jeweils gegen den Anschluss N als Bezugspotential definiert.

Die Spannung des internen Energiespeichers 9 wird mit $U_C$ bezeichnet und ist, wie in Fig. 5 gezeigt, positiv vom Knoten zwischen der ersten und zweiten zum Konten zwischen der dritten und vierten Schleife definiert.

Die steuerbaren elektronischen Schalter 11, 13, 15 bzw. 17 sind als asymmetrisch sperrende IGBT ("insulated-gate bipolar transistor", Bipolartransistor mit isolierter Gateelektrode) ausgebildet. Die Dioden sind in ihrer Sperrspannung und Schaltgeschwindigkeit an die Werte der jeweiligen steuerbaren elektronischen Schalter angepasst. Die Sperrspannung hängt von der Spannung $U_C$ bzw. $U_d$ des internen und externen Energiespeichers 9 bzw. 30 ab und ist höher als diejenige der Dioden 2, 4, 6 bzw. 8.

In Tab. 1 sind durch den leistungsseitig anschlusskompatiblen Funktionsblock 100 darstellbare Schaltzustände aufgelistet, welche im Normalbetrieb bevorzugt genutzt werden. Dabei bezeichnet "0" den Ausschaltzustand und "1" den Einschaltzustand des jeweiligen steuerbaren elektronischen Schalters 11, 13, 15 bzw. 17. Weiterhin ist die Ausgangsspannung $U_{X2}$ für den jeweiligen Schaltzustand angegeben.

Schließlich zeigt Tab. 1 die resultierende Änderung dW/dt der im leistungsseitig anschlusskompatiblen Funktionsblock 100 gespeicherten Energie W für den Fall positiven Ladestroms, i.e. $i_W > 0$ (für negativen Ladestrom gilt entsprechend das umgekehrte Vorzeichen). Dabei bezeichnet "+1" eine Zunahme dieser Energie, "-1" eine Abnahme. "0" bedeutet, dass in dem Schaltzustand keine Änderung der im leistungsseitig anschlusskompatiblen Funktionsblock 100 gespeicherten Energie W erfolgt.

**Tab. 1**

| Zustand | Schalter | | | | Ausgangsspannung | Interner Energiespeicher |
|---|---|---|---|---|---|---|
| Nr. | 11 | 13 | 15 | 17 | $U_{X2}$ | Sign(dW/dt) |
| 1 | 1 | 0 | 1 | 0 | $- U_C$ | +1 |
| 2 | 1 | 1 | 0 | 0 | 0 | 0 |
| 3 | 0 | 1 | 0 | 1 | $+ U_C + U_d$ | -1 |
| 4 | 0 | 0 | 1 | 1 | $+ U_d$ | 0 |

Der vorstehend mit Bezug auf Fig. 3 erläuterte, betriebsintern bekannte Funktionsblock 10 kann nur die beiden Zustände "2" und "4" darstellen (wobei in Tab. 1 die Schalter "11" bzw. "13" durch dessen Schalter "1" bzw. "3" zu ersetzen sind).

Wie Tab. 1 zu entnehmen ist, lässt sich durch den internen Energiespeicher 9 ein zusätzlicher Schaltzustand "3" realisieren, in dem die Ausgangsspannung $U_{X2}$ positiver als der positive Pol des externen Energiespeichers 30 ist. Darüber hinaus lässt sich durch den internen Energiespeicher 9 ein weiterer zusätzlicher Schaltzustand "1" realisieren, in dem die Ausgangsspannung $U_{X2}$ negativer als der negative Pol des externen Energiespeichers 30 ist. Damit erweitert sich die Anzahl der möglichen Ausgangsspannungswerte auf vier.

Diese erweiterte Funktionalität kann natürlich auch durch einen anders als gemäß Fig. 5 aufgebauten leistungsseitig anschlusskompatiblen Funktionsblock erzielt werden. Wesentlich für die vorliegende Erfindung ist insofern lediglich, dass dieser Funktionsblock wenigstens einen zusätzlichen Schaltzustand aufweist, in dem seine Ausgangsspannung $U_{X2}$ positiver als der positive Pol des externen Energiespeichers 30 ist, und/oder wenigstens einen zusätzlichen Schaltzustand aufweist, in dem eine Ausgangsspannung $U_{X2}$ negativer als der negative Pol des Energiespeichers 30 ist. Dies gilt unabhängig von der Polarität des Ausgangsstromes (Strangstromes). Hierzu umfasst der leistungsseitig anschlusskompatible Funktionsblock 100 wenigstens einen internen Energiespeicher 9.

Umfasst daher eine leistungselektronische Schaltungsanordnung erfindungsgemäß wenigstens einen solchen leistungsseitig anschlusskompatiblen Funktionsblock, so ermöglicht dies einen effizienteren Betrieb der Drehfeldmaschine.

So lassen sich beispielsweise bei der ersten Ausführung nach Fig. 7, bei der einer Strangwicklung 41 ein herkömmlicher, betriebsintern bekannter Funktionsblock 10 und ein leistungsseitig anschlusskompatibler Funktionsblock 100 zugeordnet sind, pro Strangwicklung siebe verschiedene Ausgangsspannungen darstellen, wie Tab. 2 zeigt:

**Tab. 2**

| Zustand | Schalter | | | | | | Ausgangsspannung | Interner Energiespeicher |
|---|---|---|---|---|---|---|---|---|
| Nr. | 1 | 3 | 11 | 13 | 15 | 17 | $(U_{X1} - U_{X2})$ | sign(dW/dt) |
| 1 | 0 | 0 | 1 | 0 | 1 | 0 | $+ U_C + U_d$ | +1 |
| 2 | 0 | 1 | 1 | 1 | 0 | 0 | $+ U_d$ | 0 |
| 3 | 1 | 1 | 0 | 1 | 0 | 1 | $- U_C$ | -1 |
| 4 | 1 | 0 | 0 | 0 | 1 | 1 | 0 | 0 |
| 5 | 1 | 0 | 1 | 0 | 1 | 0 | $+ U_C$ | +1 |
| 6 | 1 | 1 | 1 | 1 | 0 | 0 | 0 | 0 |
| 7 | 0 | 1 | 0 | 1 | 0 | 1 | $- U_C - U_d$ | -1 |
| 8 | 0 | 0 | 0 | 0 | 1 | 1 | $- U_d$ | 0 |

Tab. 2 entspricht dabei in Struktur und Nomenklatur Tab. 1, wobei $(U_{X1} - U_{X2})$ die Ausgangsspannung des Stranges 41 bezeichnet. Ersichtlich erhöht sich die Anzahl der möglichen Ausgangsspannungen, wobei mehrere Schaltzustände realisiert werden können, in denen die Ausgangsspannung positiver als der positive Pol bzw. negativer als der negative Pol des Energiespeichers 30 ist. Dadurch ergeben sich mehr Freiheitsgrade bei der Steuerung der Strangströme.

Die in Fig. 7 gezeigte Verschaltung einer Strangwicklung 41 mit einem herkömmlichen, betriebsintern bekannten Funktionsblock 10 und einem leistungsseitig anschlusskompatiblen Funktionsblock 100 kann beispielsweise auch bei drei Strangwicklungen 41, 42, 43 umgesetzt sein, wie dies Fig. 8 zeigt. Dabei erhöht sich die Anzahl der insgesamt für den Betrieb der Drehfeldmaschine möglichen Schaltzustände entsprechend. Wie vorstehend ausgeführt, kann also durch das Ersetzen einer bestimmten Anzahl bekannter Funktionsblöcke 10 durch leistungsseitig anschlusskompatible Funktionsblöcke 100 die Anzahl der Freiheitsgrade gezielt erhöht werden, wobei vorteilhafterweise ein optimaler Kompromiss zwischen dem durch den Einsatz leistungsseitig anschlusskompatibler Funktionsblöcke erhöhten Aufwand und dem durch die zusätzlichen Freiheitsgrade erzielten Nutzen umgesetzt werden kann. So zeigt beispielsweise Fig. 10 eine entsprechende Anordnung, bei der alle Funktionsblöcke als leistungsseitig anschlusskompatible Funktionsblöcke 100 ausgebildet sind.

Bevorzugt werden insofern Anordnungen wie die in Fig. 8 dargestellte, bei denen die Hälfte der Funktionsblöcke als leistungsseitig anschlusskompatible Funktionsblöcke ausgebildet ist und der zusätzliche Aufwand daher nicht allzu hoch ist. Auch Anordnungen wie die in Fig. 9 dargestellte sind zu bevorzugen, bei denen zwar alle Funktionsblöcke als leistungsseitig anschlusskompatible Funktionsblöcke ausgebildet sind, jedoch als solches bereits eine geringere Anzahl von Funktionsblöcken eingesetzt werden.

Die zusätzlichen Schaltzustände ermöglichen besonders vorteilhaft bei hochausgenutzten Drehfeldmaschinen einen wesentlich effizienteren Betrieb, insbesondere auch bei schwächeren Gleichspannungsquellen 30, die große Spannungstoleranzen aufweisen.

Im Störfall (beispielsweise Kurzschluss des externen Energiespeichers 30 oder Absinken von dessen Spannung deutlich unter Nennspannung) werden alle steuerbaren elektronischen Schalter 11, 13, 15 und 17 der leistungsseitig anschlusskompatibler Funktionsblöcke 100 in der ersten, zweiten, dritten oder vierten Ausführung einheitlich ausgeschaltet. Damit können unkontrollierte Überströme in den Strangwicklungen 41-43 und damit verbundene hohe Bremsmomente der Drehfeldmaschine vermieden werden. Dies gilt unabhängig von der Spannung $U_d$ des externen Energiespeichers 30. Vorteilhafterweise sind hierzu der interne Energiespeicher 9 und die zugehörigen Halbleiter 13, 14, 15 bzw. 16 ausreichend spannungsfest bemessen, was bei üblichen Spannungsbereichen von beispielsweise 200V bis 800 V Gleichspannung ohne signifikante Nachteile erfüllbar ist.

In Tab. 1 bzw. 2 sind die Werte für sign(dW(dt) angegeben. Die Vorzeichen gelten für positive Polarität des Strangstromes. Für negative Polarität gelten die gleichen Ausgangsspannungen, jedoch das umgekehrte Vorzeichen (dW/dt). Die Kenntnis dieser Energieänderungen ermöglicht eine Regelung der Spannung $U_C$ des internen Energiespeichers 9 auf einen vorgegebenen Sollwert. Dieser Sollwert ist im Ausführungsbeispiel proportional zur Drehzahl der Drehfeldmaschine. Somit ergibt sich bei Stillstand oder niedrigen Drehzahlen ein Sollwert ungefähr gleich Null. Damit minimiert sich in diesen Betriebszuständen die Stromwelligkeit. Zudem erübrigt sich eine Vorladung des Kondensators des internen Energiespeichers 9.

**Patentansprüche**

1. Leistungselektronische Schaltungsanordnung mit Funktionsblöcken (10, 20, 100) zum steuerbaren, bidirektionalen Energieaustausch zwischen einer Drehfeldmaschine mit wenigstens einem Strang (41, 42, 43) und einem externen Energiespeicher (30) mit einem positiven (P) und einem negativen (N) Pol,
   **dadurch gekennzeichnet, dass**
   wenigstens ein Funktionsblock als leistungsseitig anschlusskompatibler Funktionsblock (100) ausgebildet ist, der wenigstens einen internen Energiespeicher (9) umfasst, wobei
   dieser Funktionsblock wenigstens einen zusätzlichen Schaltzustand aufweist, in dem eine Ausgangsspannung ($U_{X2}$) positiver als der positive Pol (P) des externen Energiespeichers (30) ist; und/oder
   dieser Funktionsblock wenigstens einen zusätzlichen Schaltzustand aufweist, in dem eine Ausgangsspannung ($U_{X2}$) negativer als der negative Pol (N) des Energiespeichers (30) ist.

2. Leistungselektronische Schaltungsanordnung nach Anspruch 1, **dadurch gekennzeichnet, dass** die Ausgangsspannung ($U_{X2}$) unabhängig von der Polarität eines Ausgangsstromes (Strangstromes) negativer als der negative Pol (N) des Energiespeichers (30) ist.

3. Leistungselektronische Schaltungsanordnung nach Anspruch 1 oder 2, **dadurch gekennzeichnet, dass** der externe Energiespeicher (30) eine Gleichspannungsquelle oder ein Gleichspannungsnetz umfasst.

4. Leistungselektronische Schaltungsanordnung nach einem der vorhergehenden Ansprüche, **dadurch gekennzeichnet, dass** der externe Energiespeicher (30) eine Batterie, insbesondere eine Brennstoffzellen-Batterie und/oder einen Akkumulator umfasst.

5. Leistungselektronische Schaltungsanordnung nach einem der vorhergehenden Ansprüche, **dadurch gekennzeichnet, dass** mehrere, bevorzugt wenigstens die Hälfte aller Funktionsblöcke und besonders bevorzugt alle Funktionsblöcke als leistungsseitig anschlusskompatibler Funktionsblock (100) ausgebildet sind, die wenigstens einen internen Energiespeicher (9) umfassen, wobei
   diese Funktionsblöcke wenigstens einen zusätzlichen Schaltzustand aufweisen, in dem eine Ausgangsspannung ($U_{X2}$) positiver als der positive Pol (P) des externen Energiespeichers (30) ist; und/oder
   diese Funktionsblöcke wenigstens einen zusätzlichen Schaltzustand aufweisen, in dem eine Ausgangsspannung ($U_{X2}$) negativer als der negative Pol (N) des Energiespeichers (30) ist.

6. Leistungselektronische Schaltungsanordnung nach einem der vorhergehenden Ansprüche, **dadurch gekennzeichnet, dass** die Drehfeldmaschine eine permanenterregte, bevorzugt bürstenlose Synchronmaschine ist.

7. Leistungselektronische Schaltungsanordnung nach einem der vorhergehenden Ansprüche, **dadurch gekennzeichnet, dass** die Spannung ($U_C$) des internen Energiespeichers (3) abhängig von der Drehzahl und/oder dem Drehmoment der Drehfeldmaschine variabel steuer- oder regelbar ist.

8. Leistungselektronische Schaltungsanordnung nach einem der vorhergehenden Ansprüche, **dadurch gekennzeichnet, dass** eine zulässige Spannung des internen Energiespeichers (9) derart gewählt ist, dass bei einem Kurzschluss und/oder einer Unterspannung des externen Energiespeichers (30) kein unkontrolliertes Bremsen der Drehfeldmaschine auftritt.

9. Leistungselektronische Schaltungsanordnung nach einem der vorhergehenden Ansprüche, **dadurch gekennzeichnet, dass** ein leistungsseitig anschlusskompatibler Funktionsblock (100) wenigstens vier mögliche Ausgangsspannungswerte ($U_{X2}$) aufweist.

10. Leistungselektronische Schaltungsanordnung nach einem der vorhergehenden Ansprüche, **dadurch gekennzeichnet, dass** der interne Energiespeicher (9) eines leistungsseitig anschlusskompatiblen Funktionsblockes (100) einen unipolaren Speicherkondensator umfasst.

**11.** Leistungselektronische Schaltungsanordnung nach einem der vorhergehenden Ansprüche, **dadurch gekennzeichnet, dass** ein leistungsseitig anschlusskompatibler Funktionsblock (100) als steuerbaren elektronischen Schalter (11, 13, 15, 17) einen asymmetrisch sperrenden IGBT und/oder ein rückwärtsleitendes Bauelement, insbesondere ein MOSFET und/oder CoolMOS umfasst.

**12.** Leistungselektronische Schaltungsanordnung nach einem der vorhergehenden Ansprüche, **dadurch gekennzeichnet, dass** ein leistungsseitig anschlusskompatibler Funktionsblock (100) vier seriell oder parallel geschaltete Schleifen mit je einem steuerbaren elektronischen Schalter (11; 13; 15; 17) und einer Diode (12; 14; 16; 18) umfasst, die einen Umlaufsinn der Schleife definiert, wobei die Umlaufsinne der ersten und zweiten Schleife und der dritten und vierten Schleife zueinander gegensinnig, die Umlaufsinne der zweiten und dritten Schleife zueinander gleichsinnig sind, wobei der interne Energiespeicher (9) parallel zur zweiten und/oder dritten Schleife gemeinsam geschaltet ist, und wobei die erste Schleife mit dem negativen Pol (N) des externen Energiespeichers (30), die vierte Schleife mit dem positiven Pol (P) des externen Energiespeichers (30) und die zweite und/oder dritte Schleife mit einem Strang (41; 42; 43) der Drehfeldmaschine verbindbar ist.

**13.** Drehfeldmaschine mit wenigstens einem Strang (41, 42, 43), die mit einem externen Energiespeicher (30) mit einem positiven (P) und einem negativen (N) Pol zum steuerbaren, bidirektionalen Energieaustausch verbunden ist, **dadurch gekennzeichnet, dass** sie eine leistungselektronische Schaltungsanordnung nach einem der vorhergehenden Ansprüche umfasst.

**14.** Verfahren zum Steuern eines bidirektionalen Energieaustausch zwischen einer Drehfeldmaschine nach Anspruch 12 und einem externen Energiespeicher (30) mit einer leistungselektronischen Schaltungsanordnung nach einem der Ansprüche 1 bis 11, **dadurch gekennzeichnet, dass** eine Spannung ($U_C$) des internen Energiespeichers (9) auf einen Sollwert ($U_{C, soll}$) geregelt wird.

**15.** Verfahren nach Anspruch 14, **dadurch gekennzeichnet, dass** der Sollwert ($U_{C, soll}$) variabel ist und sich entsprechend der Drehzahl und/oder des Drehmomentes ändert, wobei der Sollwert bei einer Drehzahl gleich oder nahe Null ebenfalls gleich Null oder nahe Null ist.

**16.** Verfahren nach Anspruch 15, **dadurch gekennzeichnet, dass** der Sollwert ($U_{C, soll}$) einer Gleichung der Form $U_{C, soll} = \Sigma (c_i \times N^i)$ folgt, wobei N die Drehzahl oder das Drehmoment der Drehfeldmaschine und $c_i$ (i=1...n) konstante reelle Zahlen bezeichnet.

## Fig. 1

## Fig. 2

## Fig. 3

## Fig. 4

## Fig. 5

## Fig. 6

Fig. 7

Fig. 8

Fig. 9

# Fig. 10